# EUROPEAN PATENT SPECIFICATION

(11) **EP 3 214 613 B1**
(45) Date of publication and mention of the grant of the patent: **08.07.2020**
(21) Application number: 16464002.1
(22) Date of filing: 01.03.2016
(51) Int. Cl.: G09C 1/00, H04L 9/32

(54) **PROTECTING THE CONTENT OF DIFFERENT IP CORES IN A SYSTEM ON CHIP USING PUFS**
SCHUTZ DES INHALTS UNTERSCHIEDLICHER IP-KERNE IN EINEM SYSTEM AUF EINEM CHIP UNTERVERWENDUNG VON PUFS
PROTECTION DU CONTENU DE COEURS IP DIFFÉRENTS DANS UN SYSTÈME SUR PUCE EN UTILISANT DES PUFS

(43) Date of publication of application: 06.09.2017
(73) Proprietor: Siemens Aktiengesellschaft, 80333 München (DE)
(72) Inventor: Stanciu, Alexandra, 500137 Brasov (RO); Tudorancea, Marius-Virgiliu, 500419 Brasov (RO)
(74) Representative: Maier, Daniel Oliver

(56) References cited:
- STANCIU ALEXANDRA ET AL: "A novel PUF-based encryption protocol for embedded System on Chip", 2016 INTERNATIONAL CONFERENCE ON DEVELOPMENT AND APPLICATION SYSTEMS (DAS), IEEE, 19 May 2016 (2016-05-19), pages 158-165, XP032912738, DOI: 10.1109/DAAS.2016.7492566 [retrieved on 2016-06-15]
- Hiroyuki Tomiyama ET AL: "PUF_based Security Enhancement for Automotive Software Update", , 21 June 2015 (2015-06-21), XP055298886, Retrieved from the Internet: URL:http://www.mpsoc-forum.org/previous/20 15/slides/22B-Hiroyuki Tomiyama.pdf [retrieved on 2016-08-31]
- SHIJUN ZHAO ET AL: "Providing Root of Trust for ARM TrustZone using SRAM PUFs", INTERNATIONAL ASSOCIATION FOR CRYPTOLOGIC RESEARCH,, vol. 20140625:034646, 25 June 2014 (2014-06-25), pages 1-12, XP061016339, [retrieved on 2014-06-25]
- Martin Hutle: "SPARKS Smart Grids Week Stakeholder Workshop Smart meter (gateway) authentication and key management using hardware PUFs", , 20 May 2014 (2014-05-20), XP055298806, Retrieved from the Internet: URL:https://project-sparks.eu/wp-content/u ploads/2014/04/sparks-smart-meter-gateway- puf.pdf [retrieved on 2016-08-31]
- STANCIU ALEXANDRA ET AL: "Generating an unique identifier for FPGA devices", 2014 INTERNATIONAL CONFERENCE ON OPTIMIZATION OF ELECTRICAL AND ELECTRONIC EQUIPMENT (OPTIM), IEEE, 22 May 2014 (2014-05-22), pages 802-808, XP032615863, DOI: 10.1109/OPTIM.2014.6850952 [retrieved on 2014-07-09]
- GUAJARDO J ET AL: "FPGA intrinsic PUFs and their use for IP protection", SECURITY IN COMMUNICATION NETWORKS : THIRD INTERNATIONAL CONFERENCE ; REVISED PAPERS / SCN 2002, AMALFI, ITALY, SEPTEMBER 11 - 13, 2002; [LECTURE NOTES IN COMPUTER SCIENCE , ISSN 0302-9743], SPRINGER VERLAG, DE, vol. 4727, 23 August 2007 (2007-08-23), pages 63-80, XP002461648, DOI: 10.1007/978-3-540-74735-2_5 ISBN: 978-3-540-24128-7

## Description

### FIELD OF THE INVENTION

The present invention relates to a method implemented in a computer system for protecting the content of different IP cores in a system on chip using at least one. PUF device. The present invention also comprises a respective system on chip device.

A system on chip (SoC) is an integrated circuit (IC) that integrates all components of a computer or other electronic system into a single chip. It may contain digital, analog, mixed-signal, and often radio-frequency functions, all on a single chip substrate. A typical application of SoCs is in the area of embedded systems. An embedded system is a computer system with a dedicated function within a larger mechanical or electrical system, often with real-time computing constraints.

SoCs can be implemented as an application-specific integrated circuit (ASIC) or using a field-programmable gate array (FPGA). A field-programmable gate array (FPGA) is an integrated circuit designed to be configured by a customer or a designer after manufacturing. The FPGA configuration is generally specified using a hardware description language (HDL), similar to that used for an application-specific integrated circuit (ASIC).

In electronic design a semiconductor intellectual property core, IP core, or IP block, is a reusable unit of logic, cell, or chip layout design that is the intellectual property of one party. IP cores may be licensed to another party or can be owned and used by a single party alone. The term is derived from the licensing of the patent and/or source code copyright that exist in the design. IP cores can be used as building blocks within ASIC chip designs or FPGA logic designs. IP cores can have the form of soft cores or hard cores.

Soft cores are typically offered as synthesizable RTL (register-transfer level). Synthesizable cores are delivered in a hardware description language such as Verilog or VHDL. IP cores delivered to chip makers as RTL permit chip designers to modify designs at the functional level. Soft IP cores are also sometimes offered as generic gate-level netlists. The netlist is a boolean-algebra representation of the IP's logical function implemented as generic gates or process specific standard cells. An IP core implemented as generic gates is portable to any process technology. Both netlist and synthesizable cores allow a synthesis, placement and route (SPR) design flow.

Hard cores, by the nature of their low-level representation, offer better predictability of chip performance in terms of timing-performance and area. Analog and mixed-signal logic are generally defined as a lower-level, physical description. Hence, analog IP (SerDes, PLLs, DAC, ADC, PHYs, etc.) are provided to chip makers in transistor-layout format (such as GDSII). Digital IP cores are sometimes offered in layout format, as well. Such cores, whether analog or digital, are called "hard cores" (or hard macros), because the core's application function cannot be meaningfully modified by chip designers.

A PUF (physical unclonable function) device, or short "PUF", is a physical entity that is embodied in a physical structure and is easy to evaluate but hard to predict. A PUF is the hardware analog of a one-way function. PUFs are usually implemented in integrated circuits with high security requirements. PUFs depend on the uniqueness of their physical microstructure. This microstructure depends on random physical factors introduced during manufacturing. These factors are unpredictable and uncontrollable which makes it virtually impossible to duplicate or clone the structure.

Rather than embodying a single cryptographic key, PUFs implement challenge-response authentication to evaluate this microstructure. When a physical stimulus is applied to the structure, it reacts in an unpredictable (but repeatable) way due to the complex interaction of the stimulus with the physical microstructure of the device. The applied stimulus is called the challenge, and the reaction of the PUF is called the response. A specific challenge and its corresponding response together form a challenge-response pair. The device's identity is established by the properties of the microstructure itself. As this structure is not directly revealed by the challenge-response mechanism such a device is resistant to spoofing attacks.

Using a fuzzy extractor or key extractor PUFs can also be used to extract a unique strong cryptographic key from the physical microstructure. The same unique key is reconstructed every time the PUF is evaluated. The challenge-response mechanism is then implemented using cryptography. In many applications it is important that the output is stable. If the PUF is used for a key in cryptographic algorithms it is necessary that error correction will be done to correct any errors caused by the underlying physical processes and reconstruct the exact same key each time under all operating conditions.

A PUF establishes a data string which depends upon partially random physical characteristics of the physically unclonable function. The contents of a PUF cannot be predetermined, and PUF responses are somewhat noisy. PUFs have proven to be advantageous alternatives for many forms of secure identification, including the storing of keys, identifiers and the like in secure memories. The data string may depend on a stable state in which a configuration of components of the PUF settles upon the SoC's power-up. An example of a PUF is a volatile memory which shows a power-up contents which depends on the partially random physical characteristics of the memory. Manufacturing variations lead to different physical characteristics for different memories.

Using a PUF the need for secure memory to store a key is circumvented. A PUF furthermore provides natural protection against unauthorized attempts to obtain the cryptographic key through physical reverse engineering (also known as tampering), since damage inflicted on the PUF during the attempt would change the initial data string beyond repair. Since the behavior of a PUF depends on small variations, a certain error percentage is unavoidable. An error correction procedure can be used to correct for these fluctuations, and make sure that the reliable data string is identical, each time it is derived from the PUF. Using so-called helper data the initial data string is mapped to one or more error correctable data words. An error correctable data, word is a data word which is close to a code word of an error correcting code. An error correctable data word may be seen as the sum of a code word and an error word. By applying an error correcting algorithm corresponding to the error correcting code, the error correctable data words are decoded into corrected and decoded data words.

PUF based security mechanisms are used to derive a device unique key, based on the intrinsic physical qualities of the silicone device itself. During enrolment phase the helper data is generated, based on the PUF response and the encryption key provided by the manufacturer of the SoC or the IP core, respectively, and stored on-chip. During normal operation the PUF response is used together with the helper data to regenerate the key. Once the helper data is generated there is no possibility to regenerate it as the enrolment mechanism is disabled.

### STATE OF THE ART

In today's complex SoCs sensitive and less sensitive data are processed together on the same device, therefore keeping processing elements for different levels of sensitivity properly separated is compulsory. Custom IP cores, which are either acquired from third parties or developed in-house by the SoC designer, are subject to intellectual property (IP) rights. These IPs need to be protected against leakage of sensitive information caused either by hardware or software. Protecting IPs is a long standing problem for which solutions have been proposed in numerous publications and patents.

"Survey of protection techniques for IP cores implemented in FPGA", Laavanya Sridhar, V. Lakshmi Prabha, International Journal of Emerging Trends in Engineering and Development (IJETED), Issue 2., Vol. 5, July 2012, categorizes attacks on FPGA-based IP cores as copying, reverse engineering and tampering. A tampered device may contain harmful design code capable of causing a system malfunction or stealing sensitive data. Many protection techniques have been in place such as those developed by the Virtual Socket Alliance.

US 6305005 B1 refers to methods to securely configure an FPGA using encrypted macros, that is, to methods for programming licensed software in an FPGA, specifically each CLB, IOB, PSM and PIP contains a configuration memory which must be configured before each CLB, IOB, PSM or PIP can perform a specified function. The method is only for using macros from dedicated vendors and with authorized FPGA programming tools.

US 8181008 B2 refers to a secure system-on-chip for processing data and presents a method for securing real-time processing chains implemented in large SoCs. A supervision module compares the current conditions to a predefined set of values. The method also provides cryptographic primitives which are used to secure data transfer and memories.

"Designing secure systems on reconfigurable hardware", Huffmire, T., Brotherton, B., Callegari, N., Valamehr, J., White, J., Kastner, R., and Sherwood, T., ACM Trans. Des. Autom. Electron. Syst. Vol.13, No. 3, Article 44, July 2008, referring to a so called red/black system, in order to achieve isolation within a single device, introduces the concept of a fence. The fence is nothing more than a set of unused CLBs (Configurable Logic Blocks). In the fence, no routing or logic may be present.

US 8670561 B1 refers to a method and apparatus for limiting use of IP. Megafunctions are pre-designed, pre-tested, parameterized cores (or blocks of IP) which, when used, complement and augment existing design methodologies. Use of a megafunction IP Core or other IP in a configurable device is controlled by a combination of protection circuits implemented in the configurable device with the IP and a secure device.

Hiroyuki Tomiyama ET AL:
"PUF_based Security Enhancement for Automotive Software Update", 21 June 2015 (2015-06-21) discloses a system for remote update of Automotive software comprising a OEM external server which can be connected to the infotainment or navigation system of a vehicle for updating remotely the software of the vehicle. The system comprises a security gateway comprising a PUF connected by a CAN to the vehicle system. The system permitting to update securely the vehicle.
STANCIU ALEXANDRA ET AL: "A novel PUF-based encryption protocol for embedded System on Chip",2016 INTERNATIONAL CONFERENCE ON DEVELOPMENT AND APPLICATION SYSTEMS.
All presented solutions tackle the same problems but neither of them uses .intrinsic security features in order to protect individual IPs nor do they provide means for inter-IP-communication based on strong security.
The invention is defined by the independent claims. Preferred embodiments are set out in the dependent claims.

### SUMMARY OF THE INVENTION

One object of the present invention is to provide a possibility to protect two or more different IP cores from each other and to allow for secure communication between different IP cores of one system on chip.

According to the present invention the method for protecting the content of different IP cores in a system on chip using at least one PUF device thus includes the following steps:
- decrypting data from the first IP core with a monitor, which is situated as a security gateway between first IP core and second IP core so that communication between first IP core and second IP core is only possible via the monitor, by using the monitor's PUF device,
- encrypting the data with the monitor by using the monitor's PUF device for the second IP core and sending the so encrypted data to the second IP core.

By using this monitor as a security monitor, none of the two IP cores has any knowledge of the others secrets, like the secret keys for encryption and decryption, and no secret information, like the secret keys, is sent from one,IP core to the other. Of course, the system on chip can have more than two IP cores, so one monitor could also link three or more IP cores with each other, i.e. all communication between the three or more IP cores would run over the monitor only.

The security monitor module ensures that only initially setup devices are allowed to exchange data and only if the respective keys are "paired", that is, if a certain IP core is allowed to exchange data with another certain IP core.

One aspect of the invention is using a first PUF device of the first IP core for encrypting and decrypting data in the first IP core and/or using a second PUF device of the second IP core for encrypting and decrypting data in the second IP core. PUF devices provide for an easy encrypting/decrypting mechanism so the overhead for communication between different IP cores can be kept low.

If PUF devices are used in the IP cores another embodiment of the invention is using the first PUF device to alter its PUF response if the first IP core has been physically changed and/or using the second PUF device to alter its PUF response if the second IP core has been changed. So if an IP core has been tampered with or if an IP core has been changed physically, e.g. if his location inside the system on chip (e.g. the FGPA) has been changed, this could be seen from the PUF response of the respective IP core which also has changed. Any physical change to the IP core influences the PUF response.

One possibility to use the monitor's PUF device according to the invention is
- challenging the monitor's PUF device as part of the monitor,
- generating helper data by using the response of the monitor's PUF device and the manufacturer's encryption keys of first and second IP cores and storing the respective monitor's helper data during the enrolment phase,
- for sending data from the first IP core to the second IP core during normal operation, decrypting the data encrypted by the first IP core with the monitor by using the monitor's PUF device and the stored monitor's helper data for the first IP core and then encrypting the data with the monitor by using the monitor's PUF device and the stored monitor's helper data for the second IP core and sending the so encrypted data to the second IP core.

Enrolment of the IP cores takes place only once, enrolment normally is done by the manufacturer using the manufacturer's encryption keys. Enrolment is disabled after the first enrolment. During enrolment helper data is created. During normal operation of the system on chip, that is, after enrolment, the keys are reconstructed using the PUF device and the helper data. So during normal operation of the SoC a PUF device is challenged. The PUF response is error corrected and the encryption key is reconstructed from the corrected PUF response and the previously stored helper data. The so generated key is then used to encrypt or decrypt data.

The present invention further comprises a system on chip device for protecting the content of different IP cores according to the method of the present invention. The system includes
- a first IP core,
- a second IP core,
- a monitor which is situated as a security gateway between first IP core and second IP core so that communication between first IP core and second IP core is only possible via the monitor, said monitor containing a monitor's PUF device and being configured to decrypt data from the first IP core by using the monitor's PUF device and to encrypt data by using the monitor's PUF device for the second IP core and to send the so encrypted data to the second IP core.

This system on chip can include a first PUF device of the first IP core for encrypting and decrypting data in the first IP core and a second PUF device of the second IP core for encrypting and decrypting data in the second IP core. Generally speaking, every IP core of the system on chip has its own PUF device.

A specific aspect is characterized by
- the first IP core containing the first PUF device configured to generate first helper data by using the response of the first PUF device and a manufacturer's encryption key during the enrolment phase of the first IP core and to store the first helper data,
- the second IP core containing the second PUF device configured to generate second helper data by using the response of the second PUF device and a second manufacturer's encryption key during the enrolment phase of the second IP core and to store the second helper data,
- the monitor configured to generate helper data by using the response of the monitor's PUF device and the manufacturer's encryption keys of first and second IP cores and to store the respective monitor's helper data during the enrolment phase,
- for sending data from the first IP core to the second IP core during normal operation, the monitor being further configured to decrypt the data encrypted by the first IP core by using the monitor's PUF device and the stored monitor's helper data for the first IP core and then to encrypt the data by using the monitor's PUF device and the stored monitor's helper data for the second IP core and to send the so encrypted data to the second IP core.

The first PUF device will normally be configured (meaning that it is the intrinsic function of such PUF device) to alter its PUF response if the first IP core has been physically changed and/or the second PUF device will normally be configured (meaning that it is the intrinsic function, of such PUF device) to alter its PUF response if the second IP core has been physically changed. This to detect any changes (attacks, heating, cooling, taking apart, etc.) in or to the respective IP core, as explained above.

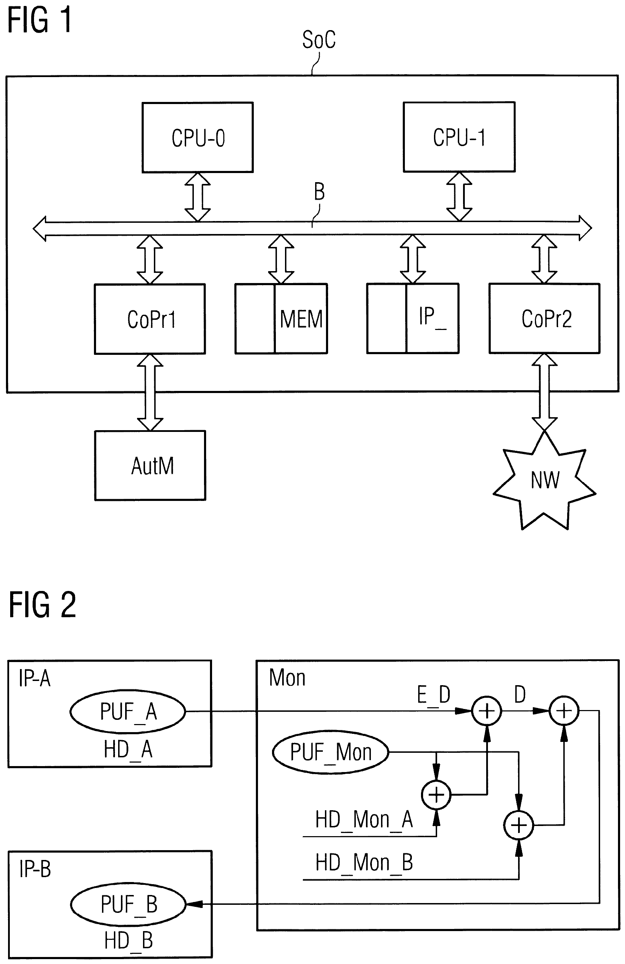

So the present invention provides for protection against leakage of sensitive information based on PUF circuits in a complex system on chip which contains third party IP cores. The system on chip can contain FPGA based designs and can be formed by a multitude of IPs, so it integrates several components in order to form an application specific hardware platform. These IPs are typically RTL synthesizable or layout level designs. The method targets SoCs implemented on FPGA devices, see Fig. 1, but can also be extended to ASICs. The proposed method is used to secure data traffic between IP cores with critical or sensitive IPs. In order to reduce the performance impact only critical data is secured, e.g. only data generated by sensitive applications, similar to the concept known as TrustZone®.

The proposed method is based on the fact that each critical IP component has a unique key. To generate the unique key each critical/sensitive IP core has its own chip ID generation circuit, here e.g. a PUF device embedded into the IP core which PUF device uniquely characterizes the IP core.

None of the communication partners, that is, none of the IP cores, has any knowledge of the others secrets and none of the communication partners have to exchange their secrets. The first IP core does not know the secret key of the second IP core and vice versa. Also the security monitor only knows which data has to be sent to which IP core and has no possibility to change the data content. In order to minimize the communication overhead for each transfer of data the encryption/decryption operations may be achieved using light cryptographic algorithms or by only securing critical data payloads.

The object of the method according to the invention is to secure the data traffic between sensitive IPs and not the individual components (PUF device, error correction mechanism, cryptographic primitives, etc.) as such which are used for the method.

### BRIEF DESCRIPTION OF FIGURES

The invention will be explained in closer detail by reference to a preferred embodiment, which is depicted schematically in the figures.
- Fig. 1: shows a possible basic structure for a SoC device according to the invention,
- Fig. 2: shows the structure of a monitor and two IP cores according to the invention.

### WAYS TO IMPLEMENT THE INVENTION

Fig. 1 shows a possible structure for a system on chip device SoC according to the invention, implemented as FPGA. The system on chip device SoC here has two CPUs, CPU-0 and CPU-1, two communications protocol devices CoPr1, CoPr2, a memory MEM and an IP core IP_. All these items are connected by an internal bus B. Communications protocol device CoPr1 serves as interface to an authentication module AutM which is not part of the system on chip device SoC. Communications protocol device CoPr2 serves as interface to an external network NW outside the system on chip device SoC.

One CPU CPU-0, communications protocol device CoPr1, part of the memory MEM (see respective box in Fig. 1) and part of the IP core IP_ (see respective box in Fig. 1) are dedicated to computing of critical data where the data traffic has to be secured. These components, for example, are having their traffic secured when communicating with an external device or component or system, such as for example an authentication module AutM. An authentication module AutM is used by the manufacturer to authenticate the chip in order to perform e.g. a software update for the system on chip device SoC. If the authentication fails then it is not an original chip or the system on chip device SoC has been tampered with (attacked, heated, cooled, etc).

Now if there is not just One IP core IP_ but two or more IP cores, IP core IP_ is replaced by a security monitor, short monitor Mon, which connects the IP cores IP_A, IP_B to each other, see Fig. 2. Monitor Mon and the IP cores IP_A, IP_B are part of the system on chip device SoC. There is no direct connection between the IP cores IP_A, IP_B via the bus B of Fig. 1. Only monitor Mon is directly connected the bus B.

During manufacturing of the FGPA device, i.e. during place & route, each IP core IP_A, IP_B is placed in a fixed physical location inside the FGPA device. Afterwards the so called enrolment is performed. During this phase, each IP core IP_A, IP_B is provided with a unique encryption key, generated by the manufacturer. Each IP core IP_A, IP_B uses its key and the response of its own PUF device PUF_A, PUF_B to generate the so called helper data which is stored. More specifically, the process of enrolment starts with a first step where a challenge is sent to the PUF device and a PUF response, also called PUF answer, is generated. Next the PUF response is processed, that is, possible errors are corrected and this corrected data is used for the generation of the helper data, based on the corrected PUF response and on the manufacturer's encryption key, and next the helper data is stored in the SoC, e.g. in the respective own IP core IP_A, IP_B.

So referring to Fig. 2, the enrolment process starts with challenging the first PUF device PUF_A of the first IP core IP_A and generating first helper data HD_A by using the response of the first PUF device PUF_A and a first manufacturer's encryption key which is unique for the first IP core IP_A. The helper data HD_A is saved in the first IP core IP_A. Then the second PUF device PUF_B of the second IP core IP_B is challenged and generates second helper data HD_B by using the response of the second PUF device PUF_B and a second manufacturer's encryption key which is unique for the second IP core IP_B. The helper data HD_B is saved in the second IP core IP_B.

During enrolment of protected IP cores IP_A, IP_B the monitor generates its own helper data to obtain the same keys as the ones of the authorized IP cores IP_A, IP_B. Therefore, for each key that is enrolled, that is for each IP core IP_A, IP_B that is secured, the monitor Mon module generates its own helper data. Referring to Fig. 2, the monitor's PUF device PUF_Mon is challenged, helper data HD_Mon_A is generated by using the (especially corrected) response of the monitor's PUF device PUF_Mon and the manufacturer's encryption key for the first IP core IP_A and helper data HD_Mon_B is generated by using the (especially corrected) response of the monitor's PUF device PUF_Mon and the manufacturer's encryption key for the second IP core IP_B.

Following the enrolment the key "programming" mechanism is disabled or physically removed from the FPGA design.

During normal operation of the system on chip SoC, if the first IP core IP_A needs to send data to the second IP core IP_B, the following process takes place:
1) IP core IP_A challenges its PUF device PUF_A and using the helper data HD_A reconstructs the IP core's IP_A unique key.
2) IP core IP_A encrypts the data using the reconstructed unique key.
3) Monitor Mon receives the encrypted data E_D from IP core IP_A and challenges its own PUF device PUF_Mon.
4) As the monitor Mon receives the encrypted data from IP core IP_A is uses the corresponding helper data HD_Mon_A to reconstruct the IP core's IP_A key.
5) The monitor Mon decrypts the data E_D from IP core IP_A.
6) The monitor Mon needs to send the data D to the IP core IP_B (as initially "stated" by IP core IP_A), therefore monitor Mon challenges its own PUF device PUF-Mon again.
7) Using the helper data HD_Mon_B the Monitor Mon regenerates the key of IP core IP_B and encrypts the data D originating from IP core IP_A with the key of IP core IP_B.
8) IP core IP_B receives encrypted data from the monitor Mon, challenges its own PUF device PUF_B and regenerates its own key.
9) IP core IP_B decrypts the data received from the monitor Mon.

If either of the IP cores IP_A, IP_B is modified or changed in any way or if the monitor module is tampered with, the PUF responses will differ and thus the encryption keys will not be correctly regenerated. The monitor Mon also contains a list of authorized IP cores and allowed communication schemes, e.g. which IP core is allowed to exchange data with another IP core, or which data may be exchanged. Based on this pre-programmed information the monitor Mon allows or denies the inter-IP-core communication.

### LIST OF REFERENCE SIGNS

- AutM: Authentication module
- B: Bus
- CoPr1: Communications protocol device
- CoPr2: Communications protocol device
- CPU-0: CPU
- CPU-1: CPU
- D: Data
- E_D: Encrypted Data
- HD_A: Helper data for IP core IP_A
- HD_B: Helper data for IP core IP_B
- HD_Mon_A: Monitor's helper data for IP core IP_A
- HD_Mon_B: Monitor's helper data for IP core IP_B
- IP_: IP-core
- IP_A: first IP core
- IP_B: second IP core
- MEM: Memory
- Mon: Monitor
- NW: Network
- PUF_A: first PUF device for IP_A
- PUF_B: second PUF device for IP-B
- PUF_Mon: Monitor's PUF device
- SoC: System on chip device

## Claims

1. Method implemented in a computer system for protecting the content of different IP cores (IP_A, IP_B) in a system on chip (SoC) using at least one PUF device, **characterized by** the following steps
challenging a first PUF device (PUF_A) of the first IP core (IP_A) and generating first helper data (HD_A) by using the response of the first PUF device (PUF_A) and a first manufacturer's encryption key during the enrolment phase of the first IP core (IP_A) and storing the first helper data (HD_A),
- challenging at least a second PUF device (PUF_B) of the second IP core (IP_B) and generating second helper data (HD_B) by using the response of the second PUF device (PUF_B) and a second manufacturer's encryption key during the enrolment phase of the second IP core (IP_B) and storing the second helper data (HD_B),
- challenging a monitor's PUF device (PUF_Mon) as part of a monitor (Mon),
- generating helper data (HD_Mon_A, HD_Mon_B) by using the response of the monitor's PUF device (PUF_Mon) and the manufacturer's encryption keys of first and second IP cores (IP_A, IP_B) and storing the respective monitor's helper data (HD_Mon_A, HD_Mon_B) during the enrolment phase,
- for sending data from the first IP core (IP_A) to the second IP core (IP_B) during normal operation, decrypting data from the first IP core (IP_A) with the monitor (Mon), which is situated as a security gateway between first IP core (IP_A) and second IP core (IP_B) so that communication between first IP core (IP_A) and second IP core (IP_B) is only possible via the monitor (Mon), by using the monitor's PUF device (PUF_Mon) and the stored monitor's helper data (HD_Mon_A) for the first IP core (IP_A) and then,
- encrypting the data with the monitor (Mon) by using the monitor's PUF device (PUF_Mon) and the stored monitor's helper data (HD_Mon_B) for the second IP core (IP_B) and sending the so encrypted data to the second IP core (IP_B).

2. Method according to claim 1, **characterized by**
- using the first PUF device (PUF_A) of the first IP core (IP_A) for encrypting and decrypting data in the first IP core (IP_A).

3. Method according to claim 1 or 2, **characterized by**
- using the second PUF device (PUF_B) of the second IP core (IP_B) for encrypting and decrypting data in the second IP core (IP_B).

4. Method according to claim 2 or 3, **characterized by**
- using the first PUF device (PUF_A) to alter its PUF response if the first IP core (IP_A) has been physically changed and/or using the second PUF device (PUF_B) to alter its PUF response if the second IP core (IP_B) has been changed.

5. System on chip device (SoC) for protecting the content of different IP cores (IP_A, IP_B) in the system on chip (SoC) according to the method of one of claims 1 to 4, **characterized by** the system having
- a first IP core (IP_A) containing a first PUF device (PUF_A) configured to generate first helper data (HD_A) by using the response of the first PUF device (PUF_A) and a manufacturer's encryption key during the enrolment phase of the first IP core (IP_A) and to store the first helper data (HD_A),
- a second IP core (IP_B) containing a second PUF device (PUF_B) configured to generate second helper data (HD_B) by using the response of the second PUF device (PUF_B) and a second manufacturer's encryption key during the enrolment phase of the second IP core (IP_B) and to store the second helper data (HD_B),
- a monitor (Mon) which is situated as a security gateway between first IP core (IP_A) and second IP core (IP_B) so that communication between first IP core (IP_A) and second IP core (IP_B) is only possible via the monitor (Mon), said monitor containing a monitor's PUF device (PUF_Mon) and being configured to generate helper data (HD_Mon_A, HD_Mon_B) by using the response of the monitor's PUF device (PUF_Mon) and the manufacturer's encryption keys of first and second IP cores (IP_A, IP_B) and to store the respective monitor's helper data (HD_Mon_A, HD_Mon_B) during the enrolment phase,
for sending data from the first IP core (IP_A) to the second IP core (IP_B) during normal operation, the monitor (Mon) being further configured to decrypt data from the first IP core (IP_A) by using the monitor's PUF device (PUF_Mon) and the stored monitor's helper data (HD_Mon_A) for the first IP core (IP_A) and to encrypt data by using the monitor's PUF device (PUF_Mon) for the second IP core (IP_B) and the stored monitor's helper data (HD_Mon_B) for the second IP core (IP_B) and to send the so encrypted data to the second IP core (IP_B).

6. System on chip device (SoC) according to claim 5, **characterized by**
- the first PUF device (PUF_A) of the first IP core (IP_A) for encrypting and decrypting data in the first IP core (IP_A) and
- the second PUF device (PUF_B) of the second IP core (IP_B) for encrypting and decrypting data in the second IP core (IP_B).

7. System on chip device (SoC) according to any of claims 5 to 6, **characterized by** the first PUF device (PUF_A) being configured to alter its PUF response if the first IP core (IP_A) has been physically changed and/or the second PUF device (PUF_B) being configured to alter its PUF response if the second IP core (IP_B) has been physically changed.

## Patentansprüche

1. In einem Computersystem implementiertes Verfahren zum Schutz des Inhalts unterschiedlicher IP-Kerne (IP_A, IP_B) in einem System auf einem Chip (SoC) unter Verwendung von wenigstens einer PUF-Vorrichtung, **gekennzeichnet durch** die folgenden Schritte:
Abfragen einer ersten PUF-Vorrichtung (PUF_A) des ersten IP-Kerns (IP_A) und Erzeugen erster Helferdaten (HD_A) unter Verwendung der Reaktion der ersten PUF-Vorrichtung (PUF_A) und eines ersten Verschlüsselungsschlüssels des Herstellers während der Enrolment-Phase des ersten IP-Kerns (IP_A) und Speichern der ersten Helferdaten (HD_A),
- Abfragen wenigstens einer zweiten PUF-Vorrichtung (PUF_B) des zweiten IP-Kerns (IP_B) und Erzeugen zweiter Helferdaten (HD_B) unter Verwendung der Reaktion der zweiten PUF-Vorrichtung (PUF_B) und eines zweiten Verschlüsselungsschlüssels des Herstellers während der Enrolment-Phase des zweiten IP-Kerns (IP_B) und Speichern der zweiten Helferdaten (HD_B),
- Abfragen der PUF-Vorrichtung eines Monitors (PUF_Mon) als Teil eines Monitors (Mon),
- Erzeugen von Helferdaten (HD_Mon_A, HD_Mon_B) unter Verwendung der Reaktion der PUF-Vorrichtung des Monitors (PUF_Mon) und der Verschlüsselungsschlüssel des Herstellers der ersten und zweiten IP-Kerne (IP_A, IP_B) und Speichern der Helferdaten des jeweiligen Monitors (HD_Mon_A, HD_Mon_B) während der Enrolment-Phase,
- zum Senden von Daten von dem ersten IP-Kern (IP_A) an den zweiten IP-Kern (IP_B) während des normalen Betriebs, Entschlüsseln von Daten von dem ersten IP-Kern (IP_A) mit dem Monitor, der sich als ein Sicherheits-Gateway zwischen dem ersten IP-Kern (IP_A) und dem zweiten IP-Kern (IP_B) befindet, sodass Kommunikation zwischen dem ersten IP-Kern (IP_A) und dem zweiten IP-Kern (IP_B) nur über den Monitor (Mon) möglich ist, unter Verwendung der PUF-Vorrichtung des Monitors (PUF_Mon) und der gespeicherten Helferdaten des Monitors (HD_Mon_A) für den ersten IP-Kern (IP_A) und dann
- Verschlüsseln der Daten mit dem Monitor (Mon) unter Verwendung der PUF-Vorrichtung des Monitors (PUF_Mon) und der gespeicherten Helferdaten des Monitors (HD_Mon_B) für den zweiten IP-Kern (IP_B) und Senden der so verschlüsselten Daten an den zweiten IP-Kern (IP_B).

2. Verfahren nach Anspruch 1, **gekennzeichnet durch**
- Verwenden der ersten PUF-Vorrichtung (PUF_A) des ersten IP-Kerns (IP_A) zum Verschlüsseln und Entschlüsseln von Daten in dem ersten IP-Kern (IP_A).

3. Verfahren nach Anspruch 1 oder 2, **gekennzeichnet durch**
- Verwenden der zweiten PUF-Vorrichtung (PUF_B) des zweiten IP-Kerns (IP_B) zum Verschlüsseln und Entschlüsseln von Daten in dem zweiten IP-Kern (IP_B).

4. Verfahren nach Anspruch 2 oder 3, **gekennzeichnet durch**
- Verwenden der ersten PUF-Vorrichtung (PUF_A) zum Ändern ihrer PUF-Reaktion, wenn der erste IP-Kern (IP_A) physisch verändert worden ist und/oder Verwenden der zweiten PUF-Vorrichtung (PUF_B) zum Ändern ihrer PUF-Reaktion, wenn der zweite IP-Kerns (IP_B) verändert worden ist.

5. System-on-Chip-Vorrichtung (SoC) zum Schutz des Inhalts unterschiedlicher IP-Kerne (IP_A, IP_B) in dem System auf einem Chip (SoC) nach dem Verfahren nach einem der Ansprüche 1 bis 4, **dadurch gekennzeichnet, dass** das System Folgendes umfasst:
- einen ersten IP-Kern (IP_A), der eine erste PUF-Vorrichtung (PUF_A) enthält, die dazu ausgelegt ist, erste Helferdaten (HD_A) unter Verwendung der Reaktion der ersten PUF-Vorrichtung (PUF_A) und eines Verschlüsselungsschlüssels des Herstellers während der Enrolment-Phase des ersten IP-Kerns (IP_A) zu erzeugen und die ersten Helferdaten (HD_A) zu speichern,
- einen zweiten IP-Kern (IP_B), der eine zweite PUF-Vorrichtung (PUF_B) enthält, die dazu ausgelegt ist, zweite Helferdaten (HD_B) unter Verwendung der Reaktion der zweiten PUF-Vorrichtung (PUF_B) und eines zweiten Verschlüsselungsschlüssels des Herstellers während der Enrolment-Phase des zweiten IP-Kerns (IP_B) zu erzeugen und die zweiten Helferdaten (HD_B) zu speichern,
- einen Monitor (Mon), der sich als ein Sicherheits-Gateway zwischen dem ersten IP-Kern (IP_A) und dem zweiten IP-Kern (IP_B) befindet, sodass Kommunikation zwischen dem ersten IP-Kern (IP_A) und dem zweiten IP-Kern (IP_B) nur über den Monitor (Mon) möglich ist, wobei der Monitor die PUF-Vorrichtung eines Monitors (PUF_Mon) umfasst und dazu ausgelegt ist, unter Verwendung der Reaktion der PUF-Vorrichtung des Monitors (PUF_Mon) und der Verschlüsselungsschlüssel des Herstellers der ersten und zweiten IP-Kerne (IP_A, IP_B) Helferdaten (HD_Mon_A, HD_Mon_B) zu erzeugen und die Helferdaten des jeweiligen Monitors (HD_Mon_A, HD_Mon_B) während der Enrolment-Phase zu speichern, zum Senden von Daten von dem ersten IP-Kern (IP_A) an den zweiten IP-Kern (IP_B) während des normalen Betriebs, wobei der Monitor ferner dazu ausgelegt ist,
Daten von dem ersten IP-Kern (IP_A) unter Verwendung der PUF-Vorrichtung des Monitors (PUF_Mon) und der gespeicherten Helferdaten des Monitors (HD_Mon_A) für den ersten IP-Kern (IP_A) zu entschlüsseln und Daten unter Verwendung der PUF-Vorrichtung des Monitors (PUF_Mon) für den zweiten IP-Kern (IP_B) und der gespeicherten Helferdaten des Monitors (HD_Mon_B) für den zweiten IP-Kern (IP_B) zu verschlüsseln und die so verschlüsselten Daten an den zweiten IP-Kern (IP_B) zu senden.

6. System-on-Chip-Vorrichtung (SoC) nach Anspruch 5,
**gekennzeichnet durch**
- die erste PUF-Vorrichtung (PUF_A) des ersten IP-Kerns (IP_A) zum Verschlüsseln und Entschlüssen von Daten in dem ersten IP-Kern (IP_A) und
- die zweite PUF-Vorrichtung (PUF_B) des zweiten IP-Kerns (IP_B) zum Verschlüsseln und Entschlüssen von Daten in dem zweiten IP-Kern (IP_B).

7. System-on-Chip-Vorrichtung (SoC) nach einem der Ansprüche 5 bis 6, **dadurch gekennzeichnet, dass**
die erste PUF-Vorrichtung (PUF_A) dazu ausgelegt ist, ihre PUF-Reaktion zu ändern, wenn der erste IP-Kern (IP_A) physisch verändert worden ist, und/oder die zweite PUF-Vorrichtung (PUF_B) dazu ausgelegt ist, ihre PUF-Reaktion zu ändern, wenn der zweite IP-Kern (IP_B) physikalisch verändert worden ist.

## Revendications

1. Procédé mis en œuvre dans un système informatique pour protéger le contenu de différents cœurs IP (IP_A, IP_B) dans un système sur puce (SoC) en utilisant au moins un dispositif PUF,
**caractérisé par** les étapes qui suivent :
- le challenge d'un premier dispositif PUF (PUF_A) du premier cœur IP (IP_A) et la génération de premières données d'assistance (HD_A) en utilisant la réponse du premier dispositif PUF (PUF_A) et une première clé de cryptage de fabricant pendant la phase d'enregistrement du premier cœur IP (IP_A) et le stockage des premières données d'assistance (HD_A) ;
- le challenge d'au moins un second dispositif PUF (PUF_B) du second cœur IP (IP_B) et la génération de secondes données d'assistance (HD_B) en utilisant la réponse du second dispositif PUF (PUF_B) et une seconde clé de cryptage de fabricant pendant la phase d'enregistrement du second cœur IP (IP_B) et le stockage des secondes données d'assistance (HD_B) ;
- le challenge d'un dispositif PUF de moniteur (PUF_Mon) en tant que partie d'un moniteur (Mon) ;
- la génération de données d'assistance (HD_Mon_A, HD_Mon_B) en utilisant la réponse du dispositif PUF de moniteur (PUF_Mon) et les clés de cryptage de fabricant des premier et second cœurs IP (IP_A, IP_B) et le stockage des données d'assistance de moniteur respectives (HD_Mon_A, HD_Mon_B) pendant la phase d'enregistrement ;
- pour envoyer des données depuis le premier cœur IP (IP_A) jusqu'au second cœur IP (IP_B) pendant un fonctionnement normal, le décryptage des données en provenance du premier cœur IP (IP_A) à l'aide du moniteur (Mon), lequel est situé en tant que passerelle de sécurité entre le premier cœur IP (IP_A) et le second cœur IP (IP_B) de telle sorte qu'une communication entre le premier cœur IP (IP_A) et le second cœur IP (IP_B) soit seulement possible via le moniteur (Mon), en utilisant le dispositif PUF de moniteur (PUF_Mon) et les données d'assistance de moniteur stockées (HD_Mon_A) pour le premier cœur IP (IP_A) puis
- le cryptage des données à l'aide du moniteur (Mon) en utilisant le dispositif PUF de moniteur (PUF_Mon) et les données d'assistance de moniteur stockées (HD_Mon_B) pour le second cœur IP (IP_B) et l'envoi des données ainsi cryptées au second cœur IP (IP_B).

2. Procédé selon la revendication 1, **caractérisé par** :
- l'utilisation du premier dispositif PUF (PUF_A) du premier cœur IP (IP_A) pour crypter et décrypter les données dans le premier cœur IP (IP_A).

3. Procédé selon la revendication 1 ou 2, **caractérisé par** :
- l'utilisation du second dispositif PUF (PUF_B) du second cœur IP (IP_B) pour crypter et décrypter les données dans le second cœur IP (IP_B).

4. Procédé selon la revendication 2 ou 3, **caractérisé par** :
- l'utilisation du premier dispositif PUF (PUF_A) pour altérer sa réponse PUF si le premier cœur IP (IP_A) a été modifié physiquement et/ou l'utilisation du second dispositif PUF (PUF_B) pour altérer sa réponse PUF si le second cœur IP (IP_B) a été modifié physiquement.

5. Dispositif à système sur puce (SoC) pour protéger le contenu de différents cœurs IP (IP_A, IP_B) dans le système sur puce (SoC) conformément au procédé selon l'une des revendications 1 à 4, **caractérisé en ce que** le système comporte :
- un premier cœur IP (IP_A) qui contient un premier dispositif PUF (PUF_A) qui est configuré pour générer des premières données d'assistance (HD_A) en utilisant la réponse du premier dispositif PUF (PUF_A) et une première clé de cryptage de fabricant pendant la phase d'enregistrement du premier cœur IP (IP_A) et pour stocker les premières données d'assistance (HD_A) ;
- un second cœur IP (IP_B) qui contient un second dispositif PUF (PUF_B) qui est configuré pour générer des secondes données d'assistance (HD_B) en utilisant la réponse du second dispositif PUF (PUF_B) et une seconde clé de cryptage de fabricant pendant la phase d'enregistrement du second cœur IP (IP_B) et pour stocker les secondes données d'assistance (HD_B) ; et
- un moniteur (Mon) qui est situé en tant que passerelle de sécurité entre le premier cœur IP (IP_A) et le second cœur IP (IP_B) de telle sorte qu'une communication entre le premier cœur IP (IP_A) et le second cœur IP (IP_B) soit seulement possible via le moniteur (Mon), ledit moniteur contenant un dispositif PUF de moniteur (PUF_Mon) et étant configuré pour générer des données d'assistance (HD_Mon_A, HD_Mon_B) en utilisant la réponse du dispositif PUF de moniteur (PUF_Mon) et les clés de cryptage de fabricant des premier et second cœurs IP (IP_A, IP_B) et pour stocker les données d'assistance de moniteur respectives (HD_Mon_A, HD_Mon_B) pendant la phase d'enregistrement, pour envoyer les données depuis le premier cœur IP (IP_A) jusqu'au second cœur IP (IP_B) pendant un fonctionnement normal, le moniteur (Mon) étant en outre configuré pour décrypter les données en provenance du premier cœur IP (IP_A) en utilisant le dispositif PUF de moniteur (PUF_Mon) et les données d'assistance de moniteur stockées (HD_Mon_A) pour le premier cœur IP (IP_A) et pour crypter les données en utilisant le dispositif PUF de moniteur (PUF_Mon) pour le second cœur IP (IP_B) et les données d'assistance de moniteur stockées (HD_Mon_B) pour le second cœur IP (IP_B) et pour envoyer les données ainsi cryptées au second cœur IP (IP_B).

6. Dispositif à système sur puce (SoC) selon la revendication 5, **caractérisé par** :
- le premier dispositif PUF (PUF_A) du premier cœur IP (IP_A) pour crypter et décrypter des données dans le premier cœur IP (IP_A) ; et
- le second dispositif PUF (PUF_B) du second cœur IP (IP_B) pour crypter et décrypter des données dans le second cœur IP (IP_B).

7. Dispositif à système sur puce (SoC) selon l'une quelconque des revendications 5 et 6, **caractérisé en ce que** :
le premier dispositif PUF (PUF_A) est configuré pour altérer sa réponse PUF si le premier cœur IP (IP_A) a été modifié physiquement et/ou le second dispositif PUF (PUF_B) est configuré pour altérer sa réponse PUF si le second cœur IP (IP_B) a été modifié physiquement.
